# FASCICULE DE BREVET EUROPEEN

(11) **EP 1 101 055 B1**
(45) Date de publication et mention de la délivrance du brevet: **03.07.2002**
(21) Numéro de dépôt: 99932925.3
(22) Date de dépôt: 20.07.1999
(51) Int. Cl.: F16L 13/02, F16L 21/03

(54) **DISPOSITIF DE JONCTION BOUT A BOUT DE CONDUITS**
VORRICHTUNG ZUM STOSSVERBINDEN VON ROHREN
DEVICE FOR ABUTTED JUNCTION OF PIPES

(30) Priorité: 24.07.1998 FR 9809732
(43) Date de publication de la demande: 23.05.2001
(73) Titulaire: SA Hydrotechnique, 03200 Vichy (FR)
(72) Inventeur: TAIEL, Georges, F-03300 Cusset (FR)
(74) Mandataire: Perrier, Jean-Pierre
(86) Numéro de dépôt international: FR9901778
(87) Numéro de publication internationale: WO0005526

(56) Documents cités:
- FR-A- 1 553 460
- FR-A- 2 732 743
- GB-A- 410 196
- US-A- 3 441 294
- US-A- 4 027 901

## Description

L'invention concerne le domaine de la jonction bout à bout de conduits pour réseaux d'eau et d'assainissement, en matériau soudable ou collable, et plus particulièrement, mais non exclusivement, les conduits dont la face interne porte un revêtement, tel que ciment ou autre.

Lors de la pose de ces conduits, il est nécessaire de prendre soin de bien les disposer bout à bout pour éviter toute formation entre eux d'un espace annulaire augmentant les pertes de charge.

En effet, dans les réseaux d'adduction d'eau, la multiplication des espaces annulaires entre les conduits a pour conséquence d'abaisser la pression disponible en bout du réseau d'exploitation d'une valeur pouvant aller jusqu'à plusieurs bars. Pour compenser cet abaissement et permettre d'obtenir en bout de réseau la pression de service devant être fournie, il faut, dans les réseaux fonctionnant par gravité, partir plus haut, c'est-à-dire augmenter la position altimétrique du réservoir en charge, et, dans les réseaux travaillant en refoulement, augmenter la puissance des pompes.

En outre, dans le cas des refoulements pour eaux usées ou pluviales, les espaces annulaires répétés, en moyenne tous les six mètres, forment des pièges pour toutes les matières solides et favorisent encore plus les pertes de charge.

Pour remédier à cela, il est donc nécessaire de soigner l'aboutement des conduits mais cette opération est compliquée par le poids et l'inertie des conduits, par le faible espace laissé dans une tranchée et par la fragilité du revêtement interne. Ainsi, si les opérateurs assurent un aboutement violent, pour être certain du contact entre les extrémités en vis à vis de deux conduits successifs, ils risquent de détruire localement au moins l'un des revêtements internes en créant ainsi des zones creuses favorisant la création de tourbillons freinant le déplacement de l'eau et favorisant le décollement du revêtement, pouvant aller jusqu'à sa disparition.

De même, pour les revêtements synthétiques, une blessure importante peut générer des problèmes de corrosion et de décollement de particules de revêtement.

Le brevet britannique 410 196 décrit un dispositif de jonction bout à bout de conduits métalliques comportant une couche interne de protection et dans lequel chaque extrémité de conduit est solidaire d'un manchon en forme de tulipe qui, après aboutement de deux conduits, forme une cavité recevant un matériau de remplissage non-conducteur de la chaleur, protégeant la couche interne des conduits de la chaleur de la soudure de liaison des deux tulipes. Dans une forme d'exécution un joint de butée est intercalé entre les extrémités des deux conduits pour contribuer à la protection contre la chaleur de leur couche interne. Ce joint comporte des gorges circulaires latérales destinées à recevoir les extrémités des conduits métalliques, extrémités qui sont en avant par rapport à la face en bout correspondante de la couche interne.

S'il est possible de poser sans difficulté le joint de butée sur l'extrémité de l'un des conduits à abouter, en engageant sa gorge sur cette extrémité, l'engagement de l'extrémité de l'autre conduit dans l'autre gorge du joint est très difficile et voir même impossible, en raison de l'absence de moyens de centrage de cette deuxième extrémité par rapport à la première, des faibles dimensions du joint et de ses gorges par rapport aux dimensions du conduit et de sa tulipe, mais aussi de l'enveloppement de la zone de jonction par la tulipe, empêchant de vérifier visuellement les conditions d'engagement des divers éléments. Il en résulte que le joint de butée à peu de chance d'être bien positionné, par exemple en se décentrant et/ou en se couchant ou se vrillant, en prenant des positions qui n'assurent ni sa fonction de protection thermique, ni sa fonction d'obturation parfaite de l'intervalle entre les couches internes des deux conduits.

La présente invention a pour objet de remédier à cet inconvénient en fournissant une canalisation comportant un dispositif de jonction bout à bout et des conduits présentant, à leurs extrémités, d'une part, des portées cylindriques extrêmes et, d'autre part, des faces en bout orthogonales à leur axe longitudinal.

Ce dispositif de jonction comprend :
- une douille rapportée sur l'une des portées cylindriques externes de chaque conduit et présentant une partie de grand diamètre, formant tulipe, et une partie de petit diamètre,
- un joint de butée avec un collet radial s'insérant entre les faces en bout de deux conduits aboutés, en assurant la continuité hydraulique,
- et des moyens distincts du joint de butée et assurant l'étanchéité de la jonction.

Selon l'invention, la partie de petit diamètre de la douille est emmanchée et fixée, par soudage ou collage, sur la portée cylindrique postérieure d'un conduit avec un décalage longitudinal par rapport à la face en bout de la portée précitée, de manière que la tulipe s'étende, d'une part, sur cette portée, en formant un logement annulaire, et, d'autre part, sur la portée antérieure du conduit suivant, tandis que le collet du joint de butée est solidaire d'un anneau périphérique plus large que lui et dont un coté est inséré et pincé dans le logement annulaire précité, après fixation de la tulipe sur le conduit, et dont l'autre coté coopère avec l'extrémité du conduit suivant.

Dans ce type de conduite chaque conduit est solidaire d'une tulipe qui, constituée par la douille rapportée sur lui, contribue à la jonction bout à bout, mais aussi assure le maintien du joint de butée. Lors de l'emmanchement du conduit suivant dans la tulipe, le collet radial du joint de butée amortit l'effort d'engagement et protège les revêtements internes des deux conduits disposés bout à bout. Lorsque le conduit est en service, le collet obture l'intervalle entre deux conduits, évite la formation des tourbillons et réduit les pertes de charge.

Le dispositif, qui peut être mis en place sur tout conduit tubulaire, en matériau soudable ou collable, simplifie la fabrication des conduits qui peuvent être rectilignes sur toute leur longueur, assure l'assemblage de la tulipe avec le joint de butée, facilite l'emmanchement bout à bout et permet d'obtenir une jonction étanche, sans qu'il y ait besoin de procéder à une opération complexe et sans risque de détérioration du revêtement interne de la conduite lors des opérations de pose.

Dans une forme d'exécution, l'autre coté de l'anneau du joint de butée comporte une face interne en tronc de cône apte à coopérer avec un chanfrein ménagé à l'extrémité antérieure de chaque conduit, pour assurer le positionnement de ce conduit.

Cet aménagement facilite le centrage du conduit engagé dans la tulipe, facilite l'aboutement sur le collet et supprime tout risque de détérioration du revêtement interne.

D'autres caractéristiques et avantages ressortiront de la description qui suit en référence au dessin schématique annexé représentant une forme d'exécution de ce dispositif de jonction.
Figure 1 est une vue partielle en coupe longitudinale des différents éléments constituant la partie femelle du dispositif de jonction,
Figure 2 est une vue partielle en coupe longitudinale des éléments de figure 1, lorsqu'ils sont assemblés,
Figure 3 est une vue en coupe longitudinale du dispositif lorsqu'il assure la jonction bout à bout de deux conduits.

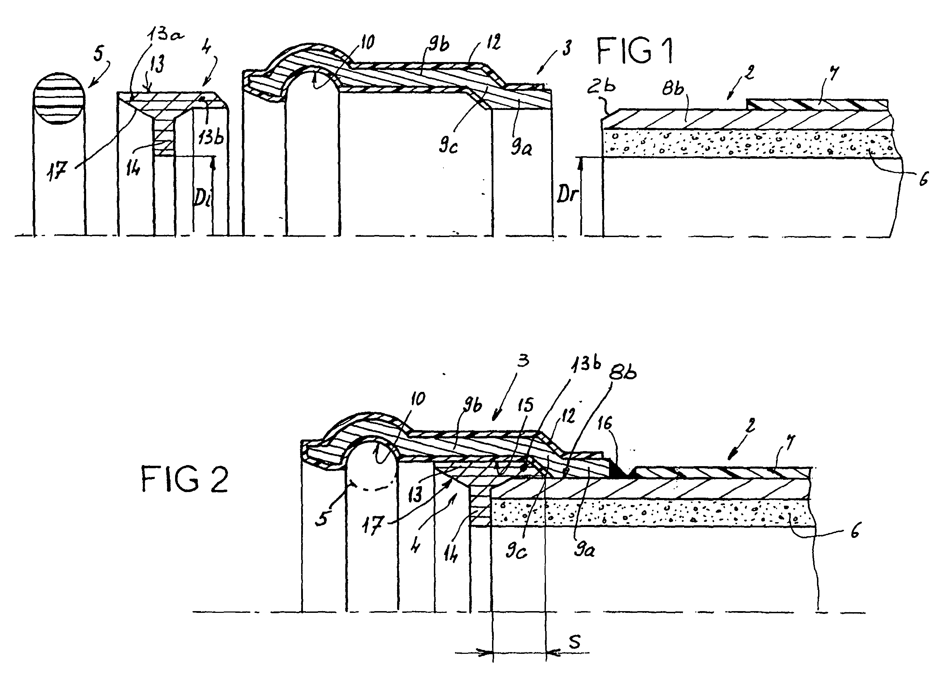

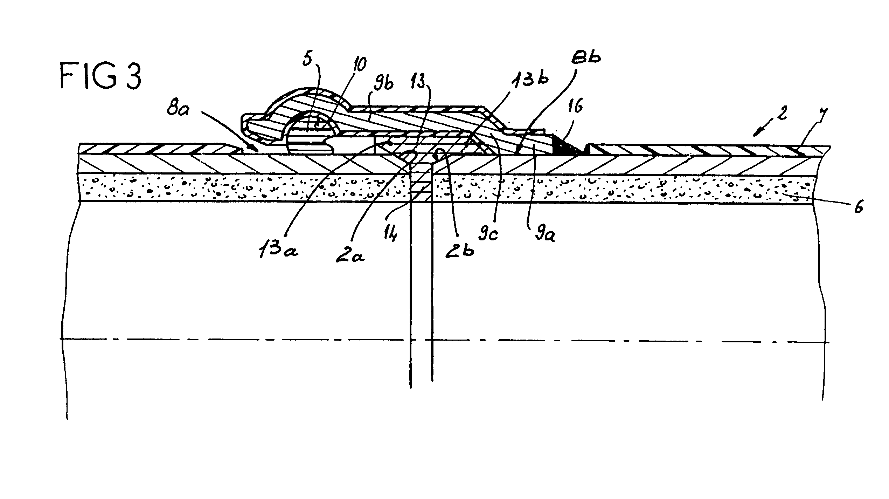

La référence numérique 2 désigne, de manière générale, un conduit d'adduction d'eau, 3 une douille faisant partie du dispositif de jonction avec un joint de butée 4 et un joint d'étanchéité 5. Chaque conduit 2 est tubulaire sur toute sa longueur et est réalisé en acier ou en matière synthétique. Sa face interne est garnie par un revêtement 6, tel qu'un revêtement en ciment. Sa face extérieure est éventuellement protégée par une pellicule en matière synthétique 7 qui ne s'étend pas sur les extrémités du conduit, de manière à laisser apparentes deux portées cylindriques extrêmes, à savoir une portée antérieure 8a, figure 3, et une portée postérieure 8b, figures 1 et 2.

La douille 3 est réalisée dans une matière pouvant être soudée ou collée sur le conduit 2, et par exemple en métal pour un conduit métallique et en matière synthétique pour un conduit en polychlorure de vinyle ou en polyéthylène. Elle comprend une partie 9a de petit diamètre, apte à s'emmancher sur l'une des portées cylindriques 8a, 8b d'un conduit, et une partie 9b de plus grand diamètre, formant une tulipe.

Dans la forme d'exécution représentée, les parties 9a, 9b sont raccordées par une partie tronconique 9c et la partie 9b comporte une gorge circulaire interne 10 ménagée près de son extrémité libre.

Lorsque la douille 3 est réalisée en métal, elle est recouverte intérieurement et extérieurement par une pellicule en matière synthétique 12 assurant sa protection contre l'oxydation. Les figures montrent que cette pellicule ne s'étend pas à l'intérieur de la partie de petit diamètre 9a.

Le joint de butée 4 présente, en section transversale, la forme générale d'un T, comprenant un collet radial 14 et un anneau externe 13, plus large longitudinalement que ce collet. Les deux côtés 13a et 13b de l'anneau sont dissymétriques, et ont chacun une section transversale qui correspond à celles des espaces formés entre les extrémités chanfreinées 2a et 2b de deux conduits disposés bout à bout et la tulipe qui les entoure. Le diamètre intérieur Di du collet 14 a une valeur qui est sensiblement la même que celle du diamètre intérieur Dr du revêtement 6 protégeant l'intérieur du conduit 2. Ce joint de butée 4 est réalisé dans un matériau synthétique élastiquement déformable, et plus spécialement dans un élastomère de qualité alimentaire, puisque son collet 14 vient en contact avec l'eau circulant dans la conduite.

Le joint d'étanchéité 5, de type torique ou à lèvres, est réalisé en élastomère.

Chaque conduit tubulaire reçoit, sur sa portée cylindrique postérieure 8b, la douille 3 qui est emmanchée avec un décalage longitudinal S par rapport à sa face en bout postérieure, de manière que sa partie de grand diamètre 9b forme, avec la portée 8b, un logement annulaire 15, apte à recevoir le côté correspondant 13b de l'anneau 13 du joint de butée 4, et s'étende aussi au-delà de cette face en bout pour recouvrir l'extrémité du conduit qui s'aboutera.

Après liaison de la douille 3 et du conduit, par collage ou par une soudure 16, le coté13b de l'anneau 13 du joint 4 est pincé entre la douille 3 et la portée cylindrique 8b du conduit et reste ainsi solidaire de ce conduit. Ainsi positionné, le collet 14 protège la face en bout du revêtement 6. Chaque conduit, ainsi équipé, peut être stocké, transporté, comme un conduit traditionnel.

Lorsque les conduits sont posés au fond d'une fouille, le joint d'étanchéité torique 5 est mis en place dans la gorge 10 du conduit disposé dans la fouille et il est procédé à l'emmanchement du conduit suivant en engageant la portée cylindrique antérieure 8a de celui-ci dans la tulipe jusqu'à ce que la face en bout du conduit suivant vienne en butée sur le collet 14. Cet engagement s'effectue d'autant plus aisément qu'au moins l'extrémité antérieure de chaque conduit est équipée d'un chanfrein 2a facilitant son passage dans le joint 5, avant que celui-ci repose sur la portée cylindrique 8a. En coopérant avec une face tronconique interne 17 ménagée sur l'autre coté 13a de l'anneau 13, le chanfrein 2a participe au centrage et au guidage de l'extrémité du conduit en cours d'engagement dans la tulipe.

Pour assurer une jonction continue, sans perte de charge, il suffit donc d'assurer l'emmanchement jusqu'à ce que l'opérateur sente une résistance provenant de la compression du joint de butée 14. Cette compression assure un effet amortisseur qui évite toute détérioration du revêtement interne 6 de l'un ou l'autre des conduits. En fin d'emmanchement, le collet 14 assure la continuité hydraulique entre les deux conduits et évite la formation de tourbillons générateurs de perte de charge.

Il ressort que, par rapport aux dispositifs de jonction connus, celui de la présente invention présente les avantages suivants :
- il assure la protection du revêtement dans la tulipe, dès la réalisation de celle ci,
- il facilite le positionnement relatif de l'élément en cours d'engagement,
- il forme amortisseur en absorbant les chocs d'aboutement et en protégeant les revêtements intérieurs des conduits,
- il peut coopérer avec des moyens d'étanchéité complémentaires dont la mise en place juste avant le montage garantit leur intégrité,
- et il est insensible aux mouvements de terrain, grâce à la compressibilité des joints, respectivement de butée 4 et d'étanchéité 5.

Ce dispositif de jonction peut être mis en oeuvre sur les conduits des réseaux d'eau potable, brute ou traitée, et d'assainissement, (eaux usées et pluviales).

## Revendications

1. Canalisation pour réseau d'eau ou d'assainissement, comportant des conduits joints bout à bout et un dispositif de raccordement, les conduits étant en matériau soudable et/ou collable, et présentant à leurs extrémités des portées cylindriques, respectivement antérieure (8a) et postérieure(8b), et des faces en bout orthogonales à leur axe longitudinal, le dispositif comprenant :
- une douille (3) rapportée sur la portée cylindrique externe postérieure de chaque conduit et présentant une partie de grand diamètre (9b), formant tulipe, et une partie de petit diamètre (9a),
- un joint de butée (4) avec un collet radial (14) s'insérant entre les faces en bout de deux conduits aboutés en assurant la continuité hydraulique,
- et des moyens (5), distincts du joint de butée et assurant l'étanchéité de la jonction,
la partie (9a) de petit diamètre de la douille (3) étant emmanchée et fixée, par soudage ou collage, sur la portée cylindrique postérieure (8b) d'un conduit avec un décalage longitudinal (S) par rapport à la face en bout de la portée (8b) précitée, de manière que la tulipe s'étende, sur cette portée (8b), en formant un logement annulaire (15),
**caractérisée en ce que** la partie la plus large de la douille se développe autour de la portée antérieure (8a) du conduit suivant, tandis que le collet (14) du joint de butée (4) est solidaire d'un anneau périphérique (13) plus large que lui et dont un coté (13b) est inséré et pincé dans le logement annulaire (15) précité, après fixation de la douille sur le conduit, et dont l'autre coté (13a) coopère avec l'extrémité du conduit suivant.

2. Dispositif selon la revendication 1, **caractérisé en ce que** l'autre coté (13a) de l'anneau (13) du joint de butée (4) comporte une face interne en tronc de cône (17) apte à coopérer avec un chanfrein (2a) ménagé à l'extrémité antérieure (8a) de chaque conduit, pour assurer le positionnement de ce conduit.

## Patentansprüche

1. Rohrleitungsanlage für ein Wasser- oder ein Abwasserableitungsnetz, umfassend Rohrleitungen, die Ende an Ende zusammengefügt sind, und eine Verbindungsvorrichtung, wobei die Rohrleitungen aus schweißbarem und/oder klebbarem Material sind, und jeweils vorne (8a) und hinten (8b) an ihren Enden zylindrische Auflageflächen und zu ihrer Längsachse orthogonale Endseiten aufweisen, die Vorrichtung umfassend :
- ein kurzes Rohr (3), welches auf die äußere, hintere zylindrische Auflagefläche jeder Rohrleitung aufgesteckt ist, und einen trichterförmigen Abschnitt von großem Durchmesser (9b) und einen Abschnitt von kleinem Durchmesser (9a) aufweist,
- eine Anschlagverbindung (4) mit einem ringförmigen Kragen (14), die zwischen den Endseiten von zwei aneinandergefügten Rohrleitungen eingefügt wird und dabei die hydraulische Kontinuität gewährleistet,
- und Vorrichtungen (5), die von der Anschlagverbindung verschieden sind und die Dichtigkeit der Verbindung gewährleisten,
wobei der Teil mit kleinem Durchmesser (9a) des Rohrs (3) durch Schweißen oder Kleben auf der hinteren zylindrischen Auflägefläche (8b) einer Rohrleitung mit einer Längsversetzung (S) bezüglich der Endseite der genannten Auflagefläche (8b) eingepasst und befestigt ist, so dass der Trichter sich auf dieser Auflagefläche (8b) erstreckt und dabei eine ringförmige Aufnahme (15) bildet,
**dadurch gekennzeichnet, dass** der größte Teil des kurzen Rohrs um die vordere Auflagefläche (8a) der folgenden Rohrleitung herum ausgebildet ist, während der Kragen (14) der Anschlagverbindung mit einem peripherischen Ring (13) aus einem Stück geformt ist, welcher Ring größer ist als er selbst, und dessen eine Seite (13b) in die genannte ringförmige Aufnahme (15) eingesetzt und eingeklemmt ist, nachdem das kurze Rohr auf der Rohrleitung befestigt wurde, und dessen andere Seite (13a) mit dem Ende der folgenden Rohrleitung zusammenwirkt.

2. Vorrichtung nach Anspruch 1, **dadurch gekennzeichnet, dass** die andere Seite (13a) des Rings (13) der Anschlagverbindung (4) eine kegelstumpfförmige Innenseite (17) besitzt, die geeignet ist, mit einer am vorderen Ende (8a) jeder Rohrleitung angebrachten Seitenfase (2a) zusammenzuwirken, um die Positionierung dieser Rohrleitung zu gewährleisten.

## Claims

1. Pipework for a water or drainage system comprising pipes joined in an abutted manner and a connection device, the pipes being made of a material which can be welded and/or glued and having at their ends cylindrical front and rear bearing surfaces (8a) and (8b) respectively and end faces orthogonal to their longitudinal axis, the device comprising
- a socket (3) attached to the rear external cylindrical bearing surface of each pipe and having a part of large diameter (9b), forming a bell socket, and a part of small diameter (9a),
- a stop joint (4) with a radial collar (14) inserted between the end faces of two abutted pipes, ensuring hydraulic continuity,
- and means (5) separate from the stop joint ensuring tightness of the junction,
the part (9a) of small diameter of the socket (3) being fitted and fixed by welding or gluing on the rear cylindrical bearing surface (8b) of a pipe with a longitudinal displacement (S) with respect to the end face of the abovementioned bearing surface (8b) such that the bell socket extends over this bearing surface (8b) forming a ring-shaped housing (15), **characterized in that** the widest part of the socket extends around the rear bearing surface (8a) of the following pipe, while the collar (14) of the stop joint (4) forms one piece with a peripheral ring (13) which is wider than it, one side (13b) of which is inserted and gripped in the abovementioned ring-shaped housing (15), after fixing of the socket on the pipe, and the other side (13a) of which cooperates with the end of the following pipe.

2. Device according to claim 1, **characterized in that** the other side (13a) of the ring (13) of the stop joint (4) comprises an internal surface in the form of a truncated cone (17) which is suitable for cooperation with a bevelled edge (2a) arranged at the rear end (8a) of each pipe to ensure positioning of this pipe.
